# EUROPEAN PATENT APPLICATION

(11) **EP 4 424 763 A1**
(43) Date of publication of application: **04.09.2024**
(21) Application number: 22887609.0
(22) Date of filing: 26.10.2022
(51) Int. Cl.: C08K 9/06, C08K 3/36, C08K 5/54, C08L 79/08, C08G 73/10

(54) **POLYAMIC ACID COMPOSITION AND METHOD FOR PREPARING SAME**

(30) Priority: 26.10.2021 KR 20210143527
(71) Applicant: PI Advanced Materials Co., Ltd., Chungcheongbuk-do 27818 (KR)
(72) Inventor: MOON, Gyeong Min, Jincheon-gun Chungcheongbuk-do 27818 (KR); RO, Gyeong Hyeon, Jincheon-gun Chungcheongbuk-do 27818 (KR); LEE, Ik Sang, Jincheon-gun Chungcheongbuk-do 27818 (KR)
(74) Representative: Murgitroyd & Company
(86) International application number: PCT/KR2022/016478
(87) International publication number: WO 2023/075413

(57) **Abstract**

The present invention relates to a polyamic acid composition and a method for preparing same. A polyimide using the polyamic acid composition according to the present invention has excellent dielectric breakdown voltage performance and corona discharge initiation voltage while maintaining heat resistance or mechanical strength, and a polyimide coating manufactured using the polyamic acid composition according to the present invention has excellent voltage endurance characteristics.

## Description

### [Technical Field]

The present invention relates to a polyamic acid composition and a method of preparing the same.

### [Background Art]

In general, polyimide (PI) is a polymer of imide monomers formed by solution polymerization of a dianhydride and a diamine or diisocyanate and has excellent mechanical properties such as strength, chemical resistance, weather resistance, and heat resistance based on the chemical stability of the imide ring. In addition, polyimide is attracting attention as a highly functional polymer material that can be applied to various industrial fields such as electronics, telecommunications, and optics due to its excellent electrical properties such as insulating properties and low dielectric constant.

Attempts have been made to use polyimide as a coating for conductors by taking advantages of its excellent heat resistance and low dielectric constant. In other words, the insulating layer (coating), which coats conductors, requires excellent insulation, adhesion to the conductor, heat resistance, and mechanical strength, and polyimide can satisfy most of these requirements.

Among insulating layers or coatings, high voltages are applied to insulated wires that constitute electrical devices, to which high voltages are applied, such as motors used at high voltages, and polyimide with excellent voltage endurance characteristics that can cope with such high voltages has not been developed yet.

Specifically, partial discharge (corona discharge) easily occurs on the coating surface to which high voltages are applied, which causes a local increase in temperature or the generation of ozone or ions, and thus, premature insulation breakdown occurs as the coating of the insulated wire deteriorates, and the lifetime of the electrical device can be shortened. Therefore, in order to use polyimide as a coating for conductors, especially as a coating to which high voltages are applied, improvement of voltage endurance characteristics such as breakdown voltage and corona discharge inception voltage is required.

### [Disclosure]

### [Technical Problem]

The purpose of the present invention is to solve the above-described problems and technical problems of the related art. The present invention provides a polyamic acid composition, which can prepare polyimide with excellent voltage endurance characteristics. The present invention can provide a polyamic acid composition, which maintains heat resistance and mechanical strength and has a high breakdown voltage and corona discharge inception voltage, and polyimide using the same.

### [Technical Solution]

The present invention relates to a polyamic acid composition and a method of preparing the same. Polyimide can be prepared by curing the polyamic acid composition, and polyimide using the polyamic acid composition according to the present invention can be applied to coat a conductor. Thus, the present invention provides a polyimide coating.

The polyamic acid composition includes a polyamic acid having polymerization units derived from a dianhydride monomer component and a diamine monomer component and a nanoparticle dispersion.

The diamine monomer component according to the present application is, for example, an aromatic diamine and may be classified as follows:
1) a diamine, which has a relatively rigid structure with one benzene nucleus in its structure, such as 1,4-diaminobenzene (or paraphenylenediamine, PDA), 1,3-diaminobenzene, 2,4-diaminotoluene, 2,6-diaminotoluene, or 3,5-diaminobenzoic acid (or DABA);
2) a diamine with two benzene nuclei in its structure such as 4,4'-diaminodiphenylmethane (methylenediamine), 3,3'-dimethyl-4,4'-diaminobiphenyl, 2,2'-dimethyl-4,4'-diaminobiphenyl, 2,2'-bis(trifluoromethyl)-4,4'-diaminobiphenyl, 3,3'-dimethyl-4,4'-diaminodiphenylmethane, 3,3'-dicarboxy-4,4'-diaminodiphenylmethane, 3,3',5,5'-tetramethyl-4,4'-diaminodiphenylmethane, bis(4-aminophenyl)sulfide, 4,4'-diaminobenzanilide, 3,3'-dichlorobenzidine, 3,3'-dimethylbenzidine (or o-tolidine), 2,2'-dimethylbenzidine (or m-tolidine), 3,3'-dimethoxybenzidine, 2,2'-dimethoxybenzidine, 3,3'-diaminodiphenyl ether, 3,4'-diaminodiphenyl ether, 4,4'-diaminodiphenyl ether (or oxydianiline, ODA), 3,3'-diaminodiphenyl sulfide, 3,4'-diaminodiphenyl sulfide, 4,4'-diaminodiphenyl sulfide, 3,3'-diaminodiphenyl sulfone, 3,4'-diaminodiphenyl sulfone, 4,4'-diaminodiphenyl sulfone, 3,3'-diaminobenzophenone, 4,4'-diaminobenzophenone, 3,3'-diamino-4,4'-dichlorobenzophenone, 3,3'-diamino-4,4'-dimethoxybenzophenone, 3,3'-diaminodiphenylmethane, 3,4'-diaminodiphenylmethane, 4,4'-diaminodiphenylmethane, 2,2-bis(3-aminophenyl)propane, 2,2-bis(4-aminophenyl)propane, 2,2-bis(3-aminophenyl)-1,1,1,3,3,3-hexafluoropropane, 2,2-bis(4-aminophenyl)-1,1,1,3,3,3-hexafluoropropane, 3,3'-diaminodiphenyl sulfoxide, 3,4'-diaminodiphenyl sulfoxide, 4,4'-diaminodiphenyl sulfoxide, or 4,4'-(1,3-propanediyl)deoxydianiline (PDDA);
3) a diamine with three benzene nuclei in its structure such as 1,3-bis(3-aminophenyl)benzene, 1,3-bis(4-aminophenyl)benzene, 1,4-bis(3-aminophenyl)benzene, 1,4-bis(4-aminophenyl) benzene, 1,3-bis(4-aminophenoxy)benzene (TPE-R), 1,4-bis(3-aminophenoxy)benzene (or TPE-Q), 1,4-bis(4-amino phenoxy)benzene (or TPE-Q), 1,3-bis(3-aminophenoxy)-4-trifluoromethylbenzene, 3,3'-diamino-4-(4-phenyl)phenoxybenzophenone, 3,3'-diamino-4,4'-di(4-phenylphenoxy)benzophenone, 1,3-bis(3-aminophenyl sulfide)benzene, 1,3-bis(4-aminophenyl sulfide)benzene, 1,4-bis(4-aminophenyl sulfide)benzene, 1,3-bis(3-aminophenyl sulfone)benzene, 1,3-bis(4-aminophenylsulfone)benzene, 1,4-bis(4-aminophenylsulfone)benzene, 1,3-bis[2-(4-aminophenyl)isopropyl]benzene, 1,4-bis[2-(3-aminophenyl)isopropyl]benzene, 1,4-bis[2-(4-aminophenyl)isopropyl]benzene, or [3-(4-aminobenzoyl)oxyphenyl]4-aminobenzoate (p-BABB); and
4) a diamine with four benzene nuclei in its structure such as 3,3'-bis(3-aminophenoxy)biphenyl, 3,3'-bis(4-aminophenoxy)biphenyl, 4,4'-bis(3-aminophenoxy)biphenyl, 4,4'-bis(4-aminophenoxy)biphenyl, bis[3-(3-aminophenoxy)phenyl]ether, bis[3-(4-aminophenoxy)phenyl]ether, bis[4-(3-aminophenoxy)phenyl]ether, bis[4-(4-aminophenoxy)phenyl]ether, bis[3-(3-aminophenoxy)phenyl]ketone, bis[3-(4-aminophenoxy)phenyl]ketone, bis[4-(3-aminophenoxy)phenyl]ketone, bis[4-(4-aminophenoxy)phenyl]ketone, bis[3-(3-aminophenoxy)phenyl] sulfide, bis[3-(4-aminophenoxy)phenyl] sulfide, bis[4-(3-aminophenoxy)phenyl] sulfide, bis[4-(4-aminophenoxy)phenyl] sulfide, bis[3-(3-aminophenoxy)phenyl]sulfone, bis[3-(4-aminophenoxy)phenyl]sulfone, bis[4-(3-aminophenoxy)phenyl]sulfone, bis[4-(4-aminophenoxy)phenyl]sulfone, bis[3-(3-aminophenoxy)phenyl]methane, bis[3-(4-aminophenoxy)phenyl]methane, bis[4-(3-aminophenoxy)phenyl]methane, bis[4-(4-aminophenoxy)phenyl]methane, 2,2-bis[3-(3-aminophenoxy)phenyl]propane, 2,2-bis[3-(4-aminophenoxy)phenyl]propane, 2,2-bis[4-(3-aminophenoxy)phenyl]propane, 2,2-bis[4-(4-aminophenoxy)phenyl]propane (BAPP), 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 2,2-bis[4-(3-aminophenoxy)phenyl]-1,1,1,3,3,3-hexafluoropropane, or 2,2-bis[4-(4-aminophenoxy)phenyl]-1, 1, 1,3,3,3-hexafluoropropane.

For example, the diamine monomer component according to the present invention may include at least one selected from the group insisting of 1,4-diaminobenzene (PPD), 1,3-diaminobenzene (MPD), 2,4-diaminotoluene, 2,6-diaminotoluene, 4,4'-diaminodiphenyl ether (ODA), 4,4'-methylenediamine (MDA), 4,4-diaminobenzanilide (4,4-DABA), N,N-bis(4-aminophenyl)benzene-1,4-dicarboxamide (BPTPA), 2,2-dimethylbenzidine (M-TOLIDINE), 2,2-bis(trifluoromethyl)benzidine (TFDB), 1,4-bisaminophenoxybenzene (TPE-Q), bisaminophenoxybenzene (TPE-R), 2,2-bisaminophenoxyphenylpropane (BAPP), and 2,2-bisaminophenoxyphenylhexafluoropropane (HFBAPP).

The dianhydride monomer component included in the polyimide resin according to the present application may be an aromatic tetracarboxylic dianhydride. The dianhydride monomer component may have one or two or more aromatic rings. The upper limit of the number of aromatic rings may be, for example, 5.

The aromatic tetracarboxylic dianhydride component may be pyromellitic dianhydride (PMDA), 3,3',4,4'-biphenyltetracarboxylic dianhydride (s-BPDA), 2,3,3',4'-biphenyltetracarboxylic dianhydride (a-BPDA), oxydiphthalic dianhydride (ODPA), diphenylsulfone-3,4,3',4'-tetracarboxylic dianhydride (DSDA), bis(3,4-dicarboxyphenyl)sulfide dianhydride, 2,2-bis(3,4-dicarboxyphenyl)-1,1,1,3,3,3-hexafluoropropane dianhydride, 2,3,3',4'-benzophenone tetracarboxylic dianhydride, 3,3',4,4'-benzophenone tetracarboxylic dianhydride (BTDA), bis(3,4-dicarboxyphenyl)methane dianhydride, 2,2-bis(3,4-dicarboxyphenyl)propane dianhydride, p-phenylenebis(trimellitic monoester acid anhydride) (TAHQ), p-biphenylenebis(trimellitic monoester acid anhydride), m-terphenyl-3,4,3',4'-tetracarboxylic dianhydride, p-terphenyl-3,4,3',4'-tetracarboxylic dianhydride, 1,3-bis(3,4-dicarboxyphenoxy)benzene dianhydride, 1,4-bis(3,4-dicarboxyphenoxy)benzene dianhydride, 1,4-bis(3,4-dicarboxyphenoxy)biphenyl dianhydride, 2,2-bis[(3,4-dicarboxyphenoxy)phenyl]propane dianhydride (BPADA), 2,3,6,7-naphthalenetetracarboxylic acid dianhydride, 1,4,5,8-naphthalenetetracarboxylic dianhydride or 4,4'-(2,2-hexafluoroisopropylidene)diphthalic acid dianhydride (6-FDA).

For example, the dianhydride monomer component according to the present invention may include at least one selected from the group consisting of pyromellitic dianhydride (PMDA), 3,3',4,4'-biphenyltetracarboxylic dianhydride (s-BPDA), 2,3,3',4'-biphenyltetracarboxylic dianhydride (a-BPDA), oxydiphthalic dianhydride (ODPA), 3,3',4,4'-benzophenonetetracarboxylic dianhydride (BTDA), p-phenylenebis(trimelitate anhydride) (TAHQ), and 4,4-(2,2-hexafluoroisopropylidene)diphthalic anhydride (6-FDA).

In an example, the nanoparticle dispersion may be an organic solvent in which nanoparticles are dispersed. The nanoparticles are nano-sized particles and include an inorganic material such as a metal oxide. For example, nanoparticles may include silica, zirconia, or a mixture thereof. Specifically, the nanoparticles according to the present invention may be nano-sized silicon dioxide (SiO₂) particles (nano-silica).

The nanoparticle dispersion may include nanoparticles having an average particle size of 1 to 200 nm, and the average particle size of the nanoparticles may be, for example, 1 to 150 nm, 1 to 100 nm, 10 to 100 nm, 10 to 50 nm, 10 to 40 nm, 10 to 30 nm, or 10 to 25 nm.

The nanoparticle dispersion may include nanoparticles surface-modified with a silicon-containing compound. In an example, the silicon-containing compound may include at least one alkoxy or alkyl group having 1 to 4 carbon atoms. For example, the silicon-containing compound may include at least one methoxy group, ethoxy group, methyl group, or ethyl group.

In another example, the nanoparticle dispersion may include nanoparticles surface-modified with a silicon-containing compound such as an organosilane or organosiloxane.

The organosilane may include at least one selected from the group consisting of n-octyltrimethoxysilane, n-octyltriethoxysilane, isooctyltrimethoxysilane, dodecyltrimethoxysilane, octadecyltrimethoxysilane, propyltrimethoxysilane, hexyltrimethoxysilane, 3-methacryloxypropyltrimethoxysilane, 3-acryloxypropyltrimethoxysilane, 3-(methacryloxy)propyltriethoxysilane, 3-(methacryloxy)propylmethyldimethoxysilane, 3-(acryloxypropyl)methyldimethoxysilane, 3-(methacryloxy)propyldimethylethoxysilane, styrylethyltrimethoxysilane, phenyltrimethoxysilane, phenyltriethoxysilane, p-tolyltriethoxysilane, vinylmethyldiacetoxysilane, vinyldimethylethoxysilane, vinylmethyldiethoxysilane, vinyltrimethoxysilane, vinyltriethoxysilane, vinyltriacetoxysilane, vinyltriisopropoxysilane, vinyltrimethoxysilane, vinyltriphenoxysilane, vinyltri-t-butoxysilane, vinyl tris(isobutoxy)silane, vinyltriisopropenoxysilane, and vinyltris(2-methoxyethoxy)silane.

The organosilane may include one or more alkoxy groups having 1 to 4 carbon atoms and may additionally include one or more substituents selected from the group consisting of an epoxy group, an amino group, an alkyl group having 1 to 4 carbon atoms, and an aryl group having 6 to 20 carbon atoms.

Specifically, the organosilane may include a methoxysilane or ethoxysilane, and for example, it may include at least one selected from the group consisting of glycidoxypropyl trimethoxysilane (GPTMS), (3-aminopropyl)trimethoxy-silane (APTMS), phenyltrimethoxysilane (PTMS), and N-phenyl-3-aminopropyltrimethoxysilane (PAPTES).

The organosiloxane may be a straight-chain or cyclic compound including an alkyl group having 1 to 10 carbon atoms or an aryl group having 6 to 20 carbon atoms.

For example, the organosiloxane may include at least one selected from the group consisting of 1,3,5,7-tetramethylcyclotetrasiloxane, octamethylcyclotetrasiloxane, hexamethylcyclotrisiloxane, hexamethyldisiloxane, 1,1,2,2-tetramethyldisiloxane, and octamethyltrisiloxane.

The surface-modified nanoparticles may be prepared by subjecting the nanoparticles to surface treatment with an organosilane or organosiloxane. For example, surface-modified nanoparticles may be obtained by surface treatment with an organosilane or organosiloxane at increased temperatures under acidic or basic conditions for about 1 to 24 hours. In addition, surface modification may be achieved by other known methods such as mixing an organosilane or organosiloxane in a solvent and reacting the same at a temperature of 10 to 100 °C or 20 to 60 °C for 1 to 10 hours or 1 to 5 hours to obtain surface-modified nanoparticles. In order to bind two or more compounds to the surface of nanoparticles, the above method may be performed separately.

The following compounds (A) and (B) may be bound to the surface of the nanoparticles included in the nanoparticle dispersion.
(A) A compound including at least one aryl group having 6 to 20 carbon atoms at the terminal; and
(B) a compound including at least one amine group, hydroxy group, thiol group, or epoxide group at the terminal.

Compound (A) is phenyltrimethoxysilane (PTMS) or N-phenyl-3-aminopropyltrimethoxysilane (PAPTES).

Compound (B) is glycidoxypropyl trimethoxysilane (GPTMS) or (3-aminopropyl)trimethoxy-silane (APTMS).

As described above, when compound (A) including at least one aryl group having 6 to 20 carbon atoms at the terminal and compound (B) including at least one amine group, hydroxy group, thiol group, or epoxide group at the terminal are bound to the nanoparticles, the agglomeration of inorganic particles in the polyamic acid composition is prevented by compound (A), and the functional group of compound (B) may improve organic-inorganic hybridization with solid content (polyamic acid).

The nanoparticles may be included in an amount of 1 to 30 parts by weight based on 100 parts by weight of the total dianhydride monomer components and diamine monomer components, and the nanoparticle dispersion may include, for example, nanoparticles in an amount of 2 to 30 parts by weight, 3 to 30 parts by weight, 3 to 25 parts by weight, 3 to 20 parts by weight, or 3 to 15 parts by weight, based on 100 parts by weight of the total dianhydride monomer components and diamine monomer components. By adjusting the nanoparticle content within the above range, voltage endurance characteristics such as breakdown voltage (BDV) or partial discharge inception voltage (PDIV) may be improved while maintaining mechanical strength and thermal properties, and the voltage endurance characteristics of a coating using a polyamic acid composition may be improved.

The nanoparticle dispersion according to the present invention may include metal ions in an amount of 3000 ppm or less. For example, the organic solvent may include metal ions in an amount of 2500 ppm or less, 2000 ppm or less, 1800 ppm or less, 1500 ppm or less, 1200 ppm or less, 1000 ppm or less, 900 ppm or less, 800 ppm or less, 700 ppm or less, 600 ppm or less, 500 ppm or less, 400 ppm or less, or 300 ppm or less, and the lower limit is not particularly limited and may be 10 ppm or more or 100 ppm or more. The metal ion may be a nanoparticle (or a nanoparticle precursor) or an impurity in the organic solvent raw material. For example, due to the high cost of 100% purification of raw materials, commercially available nanoparticles (or nanoparticle precursors) or organic solvent raw materials are generally not 100% purified and thus contain a certain amount of metal ions. When the metal ion in the raw material exceeds 3000 ppm, it may adversely affect voltage endurance characteristics such as breakdown voltage (BDV) or partial discharge inception voltage (PDIV).

The present invention may improve voltage endurance characteristics such as breakdown voltage (BDV) or partial discharge inception voltage (PDIV) by adjusting the content of metal ions within the above range and improve the voltage endurance characteristics of a coating using a polyamic acid composition.

In the present invention, the nanoparticle dispersion having the metal ion content described above may be prepared by removing foreign substances and impurities through filtering or by removing metal ions using an ion exchange resin.

After curing, the polyamic acid composition may have a breakdown voltage (BDV) of 170 kV/mm or more, as measured according to ASTM D149. The lower limit of the breakdown voltage may be 180 kV/mm or more, 190 kV/mm or more, 200 kV/mm or more, 210 kV/mm or more, 230 kV/mm or more, 240 kV/mm or more, 250kV/mm or more, 260 kV/mm or more, 270 kV/mm or more, 280 kV/mm or more, 290 kV/mm or more, 300 kV/mm or more, or 310 kV/mm or more, and the upper limit may be, for example, 500 kV/mm or less, 400 kV/mm or less, 350 kV/mm or less, 330 kV/mm or less, or 320 kV/mm or less. The polyamic acid composition of the present invention may provide a polyimide which can simultaneously satisfy a low dielectric constant, heat resistance, insulation, adhesion, and mechanical properties at high temperatures, and thus, it is possible to provide a highly reliable coating by preventing partial discharge, local deterioration, and insulation breakdown when used for coating wires.

The breakdown voltage (BDV) may be measured by a method known in the art. In an example, the breakdown voltage may be measured according to ASTM D149. A wire coated with the polyamic acid composition is prepared as a sample, and TECHNOLOGIES 6CCE50-5 from Phenix Technologies may be used for measurement. After pre-treating the prepared sample in an oven at 100 °C to remove moisture, the sample is fixed in the device set at room temperature, and the alternating current voltage is increased from zero at a constant rate by applying a voltage of 10 KVAc at the upper electrode of the lower part of the device to measure the BDV.

After curing, the polyamic acid composition may have a partial discharge inception voltage (PDIV) of 800 Vp or more, as measured according to ASTM 2275-01. In a specific example, the lower limit of the partial discharge inception voltage may be 800 Vp or more, 820 Vp or more, 830 Vp or more, or 850 Vp or more, and the upper limit may be 1000 Vp or 950 Vp or less.

The partial discharge inception voltage (PDIV) may be measured by a method known in the art. For example, the partial discharge inception voltage may be measured after preparing a two-line twisted sample by applying a load and twist according to ASTM 2275-01 to the ends of a pair of insulated wire samples manufactured using a polyamic acid composition, applying a voltage of 50 to 60 Hz frequency to the bare conductors at both ends of the sample at a constant rate and recording the voltage at which partial discharge (100 pC or more) occurs.

After curing, the polyamic acid composition according to the present invention may have a coefficient of thermal expansion (CTE) of 50 ppm/°C or less. For example, the upper limit of the CTE may be 45 ppm/°C or less, 40 ppm/°C or less, 38 ppm/°C or less, 36 ppm/°C or less, or 35 ppm/°C or less, and the lower limit may be, for example, 0.1 ppm/°C, 1 ppm/°C, 2.0 ppm/°C, 2.6 ppm/°C, 2.8 ppm/°C, 3.5 ppm/°C, or 4 ppm/°C or more. In an example, the coefficient of thermal expansion may be measured at 100 to 400 °C. The CTE may be measured using a thermomechanical analyzer, Q400, from TA Instruments. After manufacturing polyimide into a film, the film is cut it into a piece with a width of 2 mm and a length of 10 mm and heated from room temperature to 500 °C at a rate of 10 °C/min while applying a tensile force of 0.05 N under a nitrogen atmosphere, and then the slope between 100 °C and 250 °C may be measured while cooling again at a rate of 10 °C/min.

In an example, the polyamic acid composition according to the present invention may have a glass transition temperature of 300 °C or higher after curing, and the lower limit of the glass transition temperature may be 310 °C or higher, 330 °C or higher, 350 °C or higher, 370 °C or higher, or 380 °C or higher. The upper limit may be 600 °C or lower. The glass transition temperature may be measured using TMA at 10 °C/min for the polyimide prepared by curing the polyamic acid composition.

The polyamic acid composition according to the present application may have a 1 wt% thermal decomposition temperature of 400 °C or higher after curing. The thermal decomposition temperature may be measured using a thermogravimetric analysis, Q50, from TA Instruments. In a specific example, the polyimide cured from the polyamic acid is heated to 150 °C at a rate of 10 °C/min under a nitrogen atmosphere and maintained isothermally for 30 minutes to remove moisture. Afterward, the temperature is increased to 600 °C at a rate of 10 °C/min, and the temperature at which 1% weight loss occurs may be measured. The lower limit of the thermal decomposition temperature may be, for example, 450 °C or higher, 460 °C or higher, 470 °C or higher, or 480 °C or higher. The upper limit may be, for example, 800 °C or lower or 600 °C or lower.

The polyamic acid composition according to the present application may have a light transmittance of 40% or more at 380 nm to 770 nm after curing. The light transmittance may be measured using an ultraviolet/visible spectrophotometer (UV-Vis spectrophotometer). For example, the light transmittance may be 42% or more, 44% or more, 50% or more, 55% or more, 60% or more, 62% or more, or 64% or more, and the upper limit is not particularly limited but may be 90% or less or 85% or less.

The polyamic acid composition of the present application may have an elastic modulus of 2.5 GPa or more after curing. The lower limit of the elastic modulus may be, for example, 3.0 GPa or more, 3.1 GPa or more, 3.3 GPa or more, or 3.5 GPa or more. The upper limit is not particularly limited but may be 15 GPa or less or 10 GPa or less.

The polyamic acid composition may have a tensile strength of 100 MPa or more after curing. The lower limit of the tensile strength may be, for example, 110 MPa or more, 120 MPa or mor, 122 MPa or more, 124 MPa or more, or 125MPa or more, and the upper limit may be, for example, 400 MPa or less or 3500 MPa or less. The elastic modulus and tensile strength may be measured according to ASTM D-882 using Instron's Instron 5564 UTM after curing the polyamic acid composition to prepare a polyimide film and cutting the film into a piece with a width of 10 mm and a length of 50 mm. At this time, measurement may be made at a cross head speed of 50 mm/min.

The polyamic acid composition according to the present invention may further include a silane compound. The silane compound may be, for example, one or more selected from the group consisting of epoxy-based, amino-based, and thiol-based compounds, and it is also possible to mix two or more compounds thereof. Specifically, although not limited thereto, the epoxy-based compound may include glycidoxypropyl trimethoxysilane (GPTMS), and the amino-based compound may include (3-aminopropyl)trimethoxy-silane (APTMS), and the thiol-based compound may include mercapto-propyl-trimethoxysilane (MPTMS). The silane compound may include an alkoxy silane compound such as dimethyldimethoxysilane (DMDMS), methyltrimethoxysilane (MTMS), methyltriethoxysilane (MTES), or tetraethoxysilane (TEOS).

The silane compound may be included in the range of 0.01 to 1 part by weight based on 100 parts by weight of the total dianhydride monomers and diamine monomers. In a specific example, the content of the silane compound may be 0.03 parts by weight or more, 0.05 parts by weight or more, 0.08 parts by weight or more, 0.1 parts by weight or more, 0.15 parts by weight or more, or 0.18 parts by weight or more, based on 100 parts by weight of polyamic acid, and the upper limit may be, for example, 0.8 parts by weight or less, 0.5 parts by weight or less, 0.3 parts by weight or less, 0.23 parts by weight or less, or 0.15 parts by weight or less. The present application may improve electrical properties and adhesion to the adherend by including the silane compound.

The polyamic acid composition according to the present invention may have a solid content ranging from 10 to 50 wt%. The solid content may be 13 wt% or more, 15 wt% or more, 18 wt% or more, 20 wt% or more, 25 wt% or more, or 28 wt% or more, and the upper limit may be, for example, 48 wt% or less, 45 wt% or less, 43 wt% or less, 40 wt% or less, 38 wt% or less, 35 wt% or less, 33 wt% or less or 30 wt% or less. The present invention may achieve the desired physical properties and viscosity within the above range.

The nanoparticle dispersion according to the present invention may include an organic solvent, and the organic solvent may be appropriately selected in consideration of nanoparticles and dispersibility. For example, the nanoparticle dispersion may use one type of first organic solvent, or a mixed solvent of two or more types of first and second organic solvents. As an example, the organic solvent may be an aprotic polar solvent.

The nanoparticle dispersion may include at least one organic solvent selected from the group consisting of N,N'-dimethylformamide (DMF), N,N'-diethylformamide (DEF), N,N'-dimethylacetamide (DMAc), dimethylpropanamide (DMPA), p-chlorophenol, o-chlorophenol, N-methyl-pyrrolidone (NMP), gamma butyrolactone (GBL), diglyme, and naphthalene.

In an example, the mixed solvent of the present invention may be prepared by mixing a first solvent and a second solvent with a boiling point lower than that of the first solvent. The second organic solvent may be included in the range of 0.01 to 10 wt% in the total polyamic acid composition. The lower limit of the second organic solvent content may be, for example, 0.015 wt%, 0.03 wt%, 0.05 wt%, 0.08 wt%, 0.1 wt%, 0.3 wt%, 0.5 wt%, 0.8 wt%, 1 wt% or 2 wt% or more, the upper limit may be, for example, 10 wt%, 9 wt%, 8 wt%, 7 wt%, 6 wt%, 5.5 wt%, 5.3 wt%, 5 wt%, 4.8 wt%, 4.5 wt%, 4 wt%, 3 wt%, 2.5 wt%, 1.5 wt%, 1.2 wt%, 0.95 wt% or 0.4 wt% or less. In addition, the first organic solvent may be included in the range of 60 to 95 wt% in the total polyamic acid composition. The lower limit of the first organic solvent content may be, for example, 65 wt%, 68 wt%, 70 wt%, 73 wt%, 75 wt%, 78 wt% or 80 wt% or more, and the upper limit may be, for example, 93 wt%, 90 wt%, 88 wt%, 85 wt%, 83 wt%, 81 wt% or 79 wt% or less.

In an example, the first organic solvent may have a boiling point of 150 °C or more, and the second organic solvent may have a boiling point lower than that of the first organic solvent. In other words, the first organic solvent may have a higher boiling point than the second organic solvent. The second organic solvent may have a boiling point in a range of 30 °C or more to less than 150 °C. The lower limit of the boiling point of the first organic solvent may be, for example, 155 °C, 160 °C, 165 °C, 170 °C, 175 °C, 180 °C, 185 °C, 190 °C, 195 °C, 200 °C or 201 °C or higher, and the upper limit may be, for example, 500 °C, 450 °C, 300 °C, 280 °C, 270 °C, 250 °C, 240 °C, 230 °C, 220 °C, 210 °C or 205 °C or lower. The lower limit of the boiling point of the second organic solvent may be, for example, 35 °C, 40 °C, 45 °C, 50 °C, 53 °C, 58 °C, 60 °C or 63 °C or higher, and the upper limit may be, for example, 148 °C, 145 °C, 130 °C, 120 °C, 110 °C, 105 °C, 95 °C, 93 °C, 88 °C, 85 °C, 80 °C, 75 °C, 73 °C, 70 °C or 68 °C or less. In the present application, polyimide with desired physical properties may be prepared by using two organic solvents with different boiling points.

The polyamic acid composition according to the present invention may be a composition having low viscosity. The polyamic acid composition of the present application may have a viscosity of 10,000 cP or less or 9,000 cP or less when measured at a temperature of 23 °C and a shear rate of 1 s⁻¹. The lower limit is not particularly limited but may be 500 cP or more or 1000 cP or more. The viscosity may be measured using, for example, Rheostress 600 from HAAKE and under conditions of a shear rate of 1/s, a temperature of 23 °C and a plate gap of 1 mm. The present application may provide a precursor composition with excellent processability by adjusting the viscosity range and form a coating with desired physical properties when coating conductor wires.

Hereinafter, a method of preparing a polyamic acid composition is described. Although the method of preparing a polyamic acid composition according to the present invention is described excluding overlapping content with the polyamic acid composition described above, the content described in the above-described polyamic acid composition is equally applicable to the method of preparing the polyamic acid composition below.

The method of preparing a polyamic acid composition according to the present invention includes mixing and heating a dianhydride monomer component, a diamine monomer component, a solvent, and a nanoparticle dispersion.

In the mixing and heating step, the solvent may be appropriately selected in consideration of the dispersibility of the dianhydride monomer component, the diamine monomer component, and the nanoparticle dispersion, and the solvent may include, for example, at least one selected from the group consisting of N,N'-dimethylformamide (DMF), N,N'-diethylformamide (DEF), N,N'-dimethylacetamide (DMAc), dimethylpropanamide (DMPA), p-chlorophenol, o-chlorophenol, N-methyl-pyrrolidone (NMP), gamma butyrolactone (GBL), diglyme, and naphthalene.

In an example, the preparation method according to the present invention may include preparing a nanoparticle dispersion. The nanoparticle dispersion may be prepared by dispersing nanoparticles in an organic solvent.

In an example, the moisture content of the nanoparticle dispersion is 3 wt% or less. For example, the moisture content of the nanoparticle dispersion may be 2 wt% or less, 1.8 wt% or less, 1.5 wt% or less, 1 wt% or less, 0.9 wt% or less, 0.8 wt% or less, or 0.7 wt% or less. The lower limit is not particularly limited but may be, for example, 0.1 wt% or more.

The moisture content of the nanoparticle dispersion may be measured using the Karl Fischer method. Specifically, moisture content may be measured in the KS M 0034 sample using the quantitative reaction of moisture with iodine and sulfur dioxide.

When the moisture content of the nanoparticle dispersion exceeds the above range, the chain length of the polymerized polymer is shortened, viscosity formation is limited, and it is impossible to obtain polyimide with a high molecular weight.

For nanoparticle dispersions that satisfy the above conditions, moisture may be removed through vacuum decompression or by circulating the nanoparticle dispersion through an adsorbent such as a molecular sieve.

The nanoparticle dispersion may include metal ions in an amount of 3000 ppm or less. For example, the nanoparticle dispersion may include metal ions in an amount of 2500 ppm or less, 2000 ppm or less, 1500 ppm or less, 1200 ppm or less, 1000 ppm or less, 900 ppm or less, 800 ppm or less, 700 ppm or less, 600 ppm or less, 500 ppm or less, 400 ppm or less, or 300 ppm or less, and the lower limit is not particularly limited but may be 10 ppm or more or 100 ppm or more.

The metal ion content of the nanoparticle dispersion may be measured through ICP and XRD, and the wavelength emitted by heating the nanoparticle dispersion may be analyzed using a spectrometer.

Nanoparticles having the above metal ion content may be prepared by removing foreign substances and impurities through filtering or by removing metal ions using an ion exchange resin.

The present invention may improve voltage endurance characteristics such as breakdown voltage (BDV) or partial discharge inception voltage (PDIV) by adjusting the moisture content and metal ion content of the nanoparticle dispersion within the above-described ranges, and the voltage endurance characteristics of the coating using the polyamic acid composition may be improved.

The content of the above-described polyamic acid composition may be applied as is to the content related to the organic solvent in which the nanoparticles are dispersed.

The dianhydride monomer and the diamine monomer may be added in the form of a powder, lump, and solution. At the beginning of the reaction, they are added in powder form to proceed with the reaction, and it is preferable to add them in solution form to control polymerization viscosity.

For example, the reaction may be performed by adding the dianhydride monomer and diamine monomer in powder form, and then adding a dianhydride in solution form until the viscosity of the polyamic acid composition reaches a certain range.

The present invention relates to a method of preparing the polyamic acid composition, which includes adding and dissolving at least one of the dianhydride monomer and diamine monomer in the solvent, adding at least one of the dianhydride monomer and diamine monomer to the solvent two or more times in a divided manner to polymerize polyamic acid and stirring.

The equivalent ratio of the diamine monomer to the dianhydride monomer may be adjusted by adding the dianhydride monomer and diamine monomer in a divided manner. More specifically, at least one of the dianhydride monomer and diamine monomer may be added from at least two to five times in a divided manner.

The heating temperature is 150 to 300 °C and may be, for example, 160 to 200 °C, 170 to 200 °C, 180 to 200 °C, 180 to 190 °C or 185 to 195 °C.

The present invention may provide a polyimide coating using a polyamic acid composition. The polyimide coating may be coated and cured on the surface of a conductor. In an example, the method of preparing the coating may include: coating the surface of a conductor with a polyamic acid composition; and imidizing the polyamic acid composition applied to the surface of the conductor.

The polyimide coating may include 1 to 40 wt% of the polyamic acid composition according to the present invention described above. Specifically, in the step of coating the surface of the conductor with the polyamic acid composition, the content of the polyamic acid composition according to the present invention may be 1 to 40 wt% in the total polyamic acid composition and may be, for example, 1 to 30 wt%, 5 to 30 wt%, 10 to 30 wt%, or 10 to 20 wt%. The remainder of the polyimide coating other than the polyamic acid composition according to the present invention may be a polyamic acid composition that does not include nanoparticles. In this case, the rest of the composition may be the same except for the presence or absence of nanoparticles.

The conductor may be a copper wire made of copper or a copper alloy, but conductors made of other metal materials such as a silver wire, or various metal-plated wires such as aluminum or tin-plated wires may also be included as conductors. The thickness of the conductor and the coating may be set according to KS C 3107. The diameter of the conductor may range from 0.3 to 3.2 mm, and the standard film thickness of the coating (the average value of the maximum and minimum film thicknesses) may be 21 to 194 µm for type 0, 14 to 169 µm for type 1, 10 to 31 µm for type 2. The cross-sectional shape of the conductor may be a round wire, a rectangular wire, a hexagonal wire, and the like, but is not limited thereto.

The polyimide coating according to the present invention may have a voltage endurance of 170 minutes or more, which is the time that an insulating material can withstand a certain voltage according to IEC-60851-5, and it may be, for example, 180 minutes or more, 200 minutes or more, 220 minutes or more, or 230 minutes or more.

Specifically, the voltage endurance characteristics may be measured using butt welding under a voltage condition of adding 100 V to the PDIV value (700 to 2.000 V), a temperature condition of 150 °C, and a leakage current condition of 50 mA.

The present invention may provide a coated wire including a polyimide coating prepared by coating the surface of the wire with the polyamic acid composition and imidizing it. In a specific example, the coated wire may include: an electrical wire; and a coating in which the surface of the electrical wire is coated with the above-described polyimide and imidized.

The present application may provide an electronic device including the coated wire. The electronic device may be, for example, an electric motor.

### [Advantageous Effects]

Polyimide prepared using a polyamic acid composition and a method of preparing the same according to the present invention has excellent voltage endurance characteristics. Specifically, the polyimide prepared using the polyamic acid composition and the method of preparing the same according to the present invention has an excellent breakdown voltage and corona discharge inception voltage while maintaining heat resistance and mechanical strength.

### [Modes of the Invention]

Hereinafter, the present invention will be described in more detail through examples according to the present invention and comparative examples not according to the present invention, but the scope of the present invention is not limited to the examples below.

### <Preparation Examples>

### Preparation of nanoparticles - Preparation Examples 1 to 11

After 20 nm of nano-silica was synthesized by mixing and heating water, ethanol, aqueous ammonia, and a nano-silica precursor (TEOS, tetraethyorthosilicate), an organic solvent (NMP and DMAc) were added, and water and ethanol were removed through reduced pressure. Afterward, moisture was removed using a molecular sieve (4 Å), and metal ions were removed using an ion exchange resin to prepare a 20 wt% nano-silica dispersion dispersed in the organic solvent. The moisture content and metal ion content of the prepared nano-silica dispersion are shown in Table 1 below, and in Table 1, the moisture content is weight percent (wt%) based on the total mass of the nano-silica dispersion, and the metal ion content is the weight ratio of the metal ions to the weight of the nano-silica dispersion.

**[Table 1]**

| Classification | Moisture content (wt%) | Metal ion content (ppm) |
|---|---|---|
| Preparation Example 1 | 0.5 | 100 |
| Preparation Example 2 | 0.7 | 300 |
| Preparation Example 3 | 0.7 | 500 |
| Preparation Example 4 | 0.7 | 1000 |
| Preparation Example 5 | 0.7 | 1200 |
| Preparation Example 6 | 0.7 | 1500 |
| Preparation Example 7 | 0.7 | 2000 |
| Preparation Example 8 | 1 | 300 |
| Preparation Example 9 | 1.5 | 300 |
| Preparation Example 10 | 1.8 | 300 |
| Preparation Example 11 | 3 | 300 |

### Preparation Examples 12 to 16

Nano-silica dispersions were prepared in the same manner as in Preparation Examples 1 to 11 described above, except that the nano-silica surface was surface modified with an organosilane or organosiloxane as shown in Table 2 below before adding the organic solvent.

**[Table 2]**

| Classification | Nano-silica dispersion | Organosilane |
|---|---|---|
| Preparation Example 12 | Preparation Example 2 | PTMS |
| Preparation Example 13 | Preparation Example 2 | HMDS |
| Preparation Example 14 | Preparation Example 2 | PTMS/APTES |
| Preparation Example 15 | Preparation Example 6 | PTMS/APTES |
| Preparation Example 16 | Preparation Example 10 | PTMS/APTES |
| PTMS: Phenyltrimethoxysilane | | |
| HMDS: Hexamethyldisiloxane | | |
| APTES: Phenylaminopropyltrimethoxysilane | | |

### <Examples>

### Preparation of polyamic acid - Examples 1 to 20 and Comparative Example

N,N'-dimethylacetamide was added as a solvent to a 1 L reactor under a nitrogen atmosphere.

After setting the temperature to 23-50 °C, 100 parts by weight of pyromellitic dianhydride (PMDA) as a dianhydride monomer, 100 parts by weight of 4,4'-diaminodiphenyl ether (ODA) as a diamine monomer, and the nano-silica dispersion prepared in Preparation Examples 1 to 16 above were added and dissolved to attain the nano-silica contents as shown in Table 3 below, and then the PMDA and ODA were reacted at 23 to 80 °C for 5 to 10 hours to gradually increase viscosity and polymerize the polyamic acid.

The nano-silica content in Table 3 below was calculated based on 100 parts by weight of the total dianhydride monomer components and the diamine monomer components.

**[Table 3]**

| Classification | Nanoparticles (nano-silica) | |
|---|---|---|
| | Types | Parts by weight |
| Example 1 | Preparation Example 1 | 3 |
| Example 2 | Preparation Example 2 | 1 |
| Example 3 | Preparation Example 2 | 3 |
| Example 4 | Preparation Example 3 | 3 |
| Example 5 | Preparation Example 4 | 3 |
| Example 6 | Preparation Example 5 | 3 |
| Example 7 | Preparation Example 6 | 3 |
| Example 8 | Preparation Example 7 | 3 |
| Example 9 | Preparation Example 8 | 3 |
| Example 10 | Preparation Example 9 | 3 |
| Example 11 | Preparation Example 10 | 3 |
| Example 12 | Preparation Example 11 | 3 |
| Example 13 | Preparation Example 12 | 3 |
| Example 14 | Preparation Example 13 | 3 |
| Example 15 | Preparation Example 14 | 3 |
| Example 16 | Preparation Example 14 | 10 |
| Example 17 | Preparation Example 14 | 20 |
| Example 18 | Preparation Example 14 | 30 |
| Example 19 | Preparation Example 15 | 3 |
| Example 20 | Preparation Example 16 | 3 |
| Comparative Example | - | - |

### Preparation of polyimide coating - Examples 21 and 22

The polyamic acid composition of Example 15 prepared above was adjusted to a coating thickness of 5 to 15 µm per coat on a copper wire with a conductor diameter of 1 mm according to the content shown in Table 5 in a coating curing oven, and the minimum and maximum temperatures of the coating curing oven were adjusted to 350 to 550 °C, and the coating speed of the copper wire was adjusted to 12 to 32 m/min, and under these conditions, an electrical wire (coated wire) including a polyimide coating having a thickness of 33 to 35 µm was manufactured. The polyamic acid composition of Comparative Example in which the nano-silica dispersion was not added was used as the remainder except for the content of Example 15.

The properties of the cured polyamic acid composition are shown in Table 4 below, and the properties of the polyimide coating are shown in Table 5 below.

### <Experimental Example 1 - Evaluation of breakdown voltage (BDV)>

The BDV values of samples prepared in Examples and Comparative Example above were measured according to ASTMD149.

### Measurement equipment: TECHNOLOGIES 6CCE50-5 from Phenix Technologies

After pre-treating the prepared samples in an oven at 100 °C to remove moisture, the samples were fixed to the measurement equipment set at room temperature, and a voltage of 10 KVAc was applied at the upper electrode of the lower part of the device and increased from zero at a constant rate to measure the BDV.

### <Experimental Example 2 - Measurement of elastic modulus and tensile strength>

After cutting the polyimide film prepared by curing the polyamic acid solution of Examples and Comparative Example into pieces with a width of 10 mm and a length of 40 mm, the elastic modulus and tensile strength may be measured according to ASTM D-882 using Instron's Instron 5564 UTM. At this time, measurement may be made at a cross head speed of 50 mm/min.

### <Experimental Example 3 - Measurement of CTE>

A thermomechanical analyzer, Q400, from TA Instruments was used, and after cutting the polyimide film into pieces with a width of 2 mm and a length of 10 mm, the slope of the temperature range from 100 °C to 250 °C was measured after increasing the temperature from room temperature to 500 °C at a rate of 10 °C/min and cooling again at a rate of 10 °C/min under a tensile force of 0.05 N under a nitrogen atmosphere.

### <Experimental Example 4 - Light transmittance>

For 10 to 20 µm polyimide films prepared by curing the polyamic acid solutions of Examples and Comparative Example, a UV-Vis spectrophotometer, Lambda 465, from PerkinElmer was used to measure the transmittance from 380 to 770 nm in transmittance mode.

### <Experimental Example 5 - Voltage endurance>

For the polyamic acid composition (Comparative Example), which did not include the nanoparticles, and the samples of Example 21 and Example 22, the voltage endurance characteristics were measured according to IEC-60851-5 using butt welding under conditions of a voltage of +100 V based on the PDIV value, a temperature of 150 °C, and a leakage current of 50 mA, and the relative voltage endurance characteristics of Example 21 and Example 22 were shown with respect to the Comparative Example set to 100.

**[Table 4]**

| Classification | BDV (kV/mm) | Tensile strength (MPa) | CTE (ppm/°C) | Transmittance (%) |
|---|---|---|---|---|
| Example 1 | 219 | 155 | 36 | 43 |
| Example 2 | 230 | 166 | 36 | 45 |
| Example 3 | 226 | 160 | 36 | 43 |
| Example 4 | 220 | 156 | 36 | 42 |
| Example 5 | 200 | 141 | 36 | 42 |
| Example 6 | 190 | 135 | 36 | 43 |
| Example 7 | 185 | 131 | 36 | 42 |
| Example 8 | 180 | 128 | 36 | 42 |
| Example 9 | 215 | 152 | 36 | 45 |
| Example 10 | 210 | 150 | 36 | 45 |
| Example 11 | 205 | 148 | 35 | 45 |
| Example 12 | 175 | 130 | 35 | 44 |
| Example 13 | 220 | 165 | 35 | 59 |
| Example 14 | 242 | 170 | 35 | 62 |
| Example 15 | 235 | 168 | 35 | 65 |
| Example 16 | 260 | 148 | 36 | 59 |
| Example 17 | 315 | 128 | 36 | 62 |
| Example 18 | 280 | 122 | 36 | 63 |
| Example 19 | 215 | 160 | 35 | 63 |
| Example 20 | 225 | 165 | 35 | 63 |

**[Table 5]**

| Classification | Units | Comparative Example | Example 21 | Example 22 |
|---|---|---|---|---|
| Polyamic acid composition content of Example 15 | % | 0 | 10 | 20 |
| PDIV | V | >800 | >800 | >800 |
| Voltage endurance | % (level) | 100 | >109 | >150 |

## Claims

1. A method of preparing a polyamic acid composition, comprising mixing and heating a dianhydride monomer component, a diamine monomer component, a solvent, and a nanoparticle dispersion,
wherein the moisture content of the nanoparticle dispersion is 3 wt% or less.

2. The method of claim 1, wherein the metal ion content of the nanoparticle dispersion is 3000 ppm or less.

3. The method of claim 1, wherein the nanoparticle dispersion includes nanoparticles surface-modified with a silicon-containing compound.

4. The method of claim 3, wherein the silicon-containing compound includes at least one alkoxy or alkyl group having 1 to 4 carbon atoms.

5. The method of claim 3, wherein the silicon-containing compound is an organosilane or an organosiloxane.

6. The method of claim 5, wherein the organosilane includes one or more alkoxy groups having 1 to 4 carbon atoms and further includes one or more substituents selected from the group consisting of an epoxy group, an amino group, an alkyl group having 1 to 4 carbon atoms, and an aryl group having 6 to 20 carbon atoms.

7. The method of claim 5, wherein the organosiloxane is a straight-chain or cyclic compound including an alkyl group having 1 to 10 carbon atoms or an aryl group having 6 to 20 carbon atoms.

8. The method of claim 1, wherein the following compounds (A) and (B) are bound to the surface of the nanoparticles included in the nanoparticle dispersion:
(A) a compound including at least one aryl group having 6 to 20 carbon atoms at the terminal; and
(B) a compound including at least one amine group, hydroxy group, thiol group, or epoxide group at the terminal.

9. The method of claim 8, wherein the compound (A) is phenyltrimethoxysilane (PTMS) or N-phenyl-3-aminopropyltrimethoxysilane (PAPTES), and the compound (B) is glycidoxypropyl trimethoxysilane (GPTMS) or (3-aminopropyl)trimethoxysilane (APTMS).

10. The method of claim 1, wherein the nanoparticle dispersion includes nano-silica.

11. The method of claim 1, wherein the nanoparticle dispersion includes 1 to 30 parts by weight of nanoparticles based on 100 parts by weight of the total dianhydride monomer components and diamine monomer components.

12. The method of claim 1, wherein the dianhydride monomer component includes at least one selected from the group consisting of pyromellitic dianhydride (PMDA), 3,3',4,4'-biphenyltetracarboxylic dianhydride (s-BPDA), 2,3,3',4'-biphenyltetracarboxylic dianhydride (a-BPDA), 3,3',4,4'-benzophenone tetracarboxylic dianhydride (BTDA), oxydiphthalic dianhydride (ODPA), 4,4-(hexafluoroisopropylidene)diphthalic anhydride (6-FDA), and p-phenylenebis(trimellitate anhydride) (TAHQ).

13. The method of claim 1, wherein the diamine monomer component includes at least one selected from the group consisting of 1,4-diaminobenzene (PPD), 1,3-diaminobenzene (MPD), 2,4-diaminotoluene, 2,6-diaminotoluene, 4,4'-diaminodiphenyl ether (ODA), 4,4'-methylenediamine (MDA), 4,4-diaminobenzanilide (4,4-DABA), N,N-bis(4-aminophenyl)benzene-1,4-dicarboxamide (BPTPA), 2,2-dimethylbenzidine (M-TOLIDINE), 2,2-bis(trifluoromethyl)benzidine (TFDB), 1,4-bisaminophenoxybenzene (TPE-Q), bisaminophenoxybenzene (TPE-R), 2,2-bisaminophenoxyphenylpropane (BAPP), and 2,2-bisaminophenoxyphenylhexafluoropropane (HFBAPP).

14. The method of claim 1, wherein the polyamic acid composition further includes a silane compound.

15. The method of claim 1, wherein the nanoparticle dispersion includes at least one organic solvent selected from the group consisting of N,N'-dimethylformamide (DMF), N,N'-diethylformamide (DEF), N,N'-dimethylacetamide (DMAc), dimethylpropanamide (DMPA), p-chlorophenol, o-chlorophenol, N-methyl-pyrrolidone (NMP), gamma butyrolactone (GBL), diglyme, and naphthalene.

16. A polyamic acid composition prepared by the method of claim 1.

17. A polyimide coating manufactured using the polyimide composition according to claim 16.

18. The polyimide coating of claim 17, comprising 1 to 40 wt% of the polyamic acid composition according to claim 16.

19. An electrical wire comprising the polyimide coating according to claim 17.
